Europäisches Patentamt

European Patent Office

Office européen des brevets

(19)

(11) Veröffentlichungsnummer: **0 058 738**
**A1**

(12) # EUROPÄISCHE PATENTANMELDUNG

(21) Anmeldenummer: **81102891.9**

(22) Anmeldetag: **15.04.81**

(51) Int. Cl.³: **A 01 G 9/12**

(30) Priorität: **20.02.81 DE 8104778 U**

(43) Veröffentlichungstag der Anmeldung: **01.09.82**
**Patentblatt 82/35**

(84) Benannte Vertragsstaaten: **AT BE CH DE FR GB IT LI LU NL SE**

(71) Anmelder: **Seidenpfennig, Lothar, Splittenbrede 25, D-4800 Bielefeld 1 (DE)**

(72) Erfinder: **Seidenpfennig, Lothar, Splittenbrede 25, D-4800 Bielefeld 1 (DE)**

(74) Vertreter: **Patentanwälte TER MEER - MÜLLER - STEINMEISTER, Triftstrasse 4, D-8000 München 22 (DE)**

(54) **Halter für Blumenstützen.**

(57) Ein Halter für stabförmige Blumenstützen weist ein wenigstens einseitig offenes Führungsrohr (18, 52) auf, von dem ein radialer Stützarm (20, 46, 54) ausgeht, an dessen äußerem Ende sich eine Klammer (22, 56, 60) befindet. Die Klammer kann derart auf dem Rand eines Blumentopfes festgeklemmt werden, daß das Führungsrohr eine senkrechte Führung zur Aufnahme einer stabförmigen Blumenstütze im Inneren eines Blumentopfes bildet.

EP 0 058 738 A1

0058738

- 1 -

<u>BESCHREIBUNG</u>

Die Erfindung betrifft einen Halter für Blumenstützen gemäß dem Oberbegriff des Hauptanspruchs.

Sofern Blumenpflanzen oder Grünpflanzen in Blumentöpfen eine gewisse Höhe überschreiten, müssen sie abgestützt werden. Dies geschieht zumeist mit Hilfe von Holzstäben, die in die in dem Blumentopf befindliche Erde gesteckt werden und an denen die Pflanze mit Hilfe von Bändern, Drähten oder dgl. befestigt wird. Sofern ein sicherer Halt für die Pflanze geboten werden soll, ist es notwendig, diese Stäbe verhältnismäßig tief in die Erde hineinzuschieben. Insbesondere bei Pflanzen mit dichtem Wurzelwerk bereitet dies Schwierigkeiten, und es besteht im übrigen die Gefahr einer Beschädigung der Wurzeln. Bei verhältnismäßig flachen Blumentöpfen oder Blumenschalen kann zumeist eine sichere Verankerung der Stäbe nicht erreicht werden. Dies gilt auch für sogenannte Hydrokulturen, bei denen Pflanzen nicht in Erde, sondern in einer lockeren Kiesfüllung gepflanzt und mit Hilfe einer Wasserlösung ernährt werden. Da die verwendeten Stäbe im übrigen zumeist aus Holz bestehen, verfaulen sie wegen der ständigen Anwesenheit von Feuchtigkeit an ihren unteren Enden verhältnismäßig rasch.

Der Erfindung liegt daher die Aufgabe zugrunde, eine einfache und zuverlässige Abstützung für stabförmige Blumenstützen der beschriebenen Art zu schaffen.

Diese Aufgabe wird erfindungsgemäß durch einen Halter für Blumentstützen gelöst, der ein Führungsrohr zur Aufnahme einer stabförmigen Blumenstütze, einen an einem Ende starr mit dem Führungsrohr verbundenen, radial zu diesem verlaufenden Stützarm und eine von dem anderen Ende des Stützarms ausgehende, im wesentlichen parallel zu dem Führungsrohr gerichtete Halteklammer zum Aufsetzen auf den Rand

0058738

- 2 -

eines Blumentopfes umfaßt.

Vorzugsweise ist das Führungsrohr am unteren Ende geschlossen und kegelförmig zugespitzt, so daß einerseits der Eintritt von Feuchtigkeit in das Innere des Führungsrohrs vermieden wird und dieses mit Hilfe der kegelförmigen Zuspitzung leicht in den Boden eingedrückt werden kann.

Wegen der zumeist leicht kegelstumpfförmigen Form üblicher Blumentöpfe kann die Klammer zu dem Stützarm in einem verhältnismäßig großen spitzen Winkel von beispielsweise 70-80° verlaufen. Es kann jedoch auch ein Gelenk oder Scharnier zwischen dem Stützarm und der Klammer vorgesehen sein, das eine Schwenkung der Klammer in bezug auf den Stützarm in einer durch das Führungsrohr und den Stützarm gebildeten Ebene gestattet und somit eine Verwendung des Halters für zylindrische oder mit unterschiedlichem Kegelwinkel kegelstumpfförmige Blumentöpfe ermöglicht.

Der Stützarm ist vorzugsweise längsverstellbar. Dies ergibt die Möglichkeit, den Halter für Blumentöpfe mit unterschiedlichem Durchmesser einzusetzen oder auch die Blumenstütze in unterschiedlichen Positionen in bezug auf den Mittelpunkt eines Blumentopfes anzuordnen.

Für besonders hohe Pflanzen und dementsprechend lange Blumenstützen kann es erforderlich sein, eine verstärkte Klammer zu verwenden, die dem Blumentopf über einen Teilabschnitt des Umfangs folgt. Auf andere Weise läßt sich eine verstärkte Führung der Blumenstütze dadurch erzielen, daß einem Führungsrohr zwei Stützarme mit Klammer zugeordnet werden, von denen ein Stützarm mit Klammer in bezug auf die Längsmittelachse des Führungsrohres schwenkbar sein kann. Auf diese Weise können die beiden Stützarme im Umfangsabstand zueinander am Rand eines Blumentopfes festgeklammert werden, so daß sich eine sehr stabile Abstützung

- 3 -

ergibt.

Im Folgenden werden bevorzugte Ausführungsbeispiele der Erfindung anhand der beigefügten Zeichnung näher erläutert.

Fig. 1        ist eine Gesamtdarstellung eines Blumentopfes mit Pflanze, Blumenstütze und erfindungsgemäßem Halter;

Fig. 2        zeigt eine Ausführungsform der Erfindung in einer teilweise aufgeschnittenen Seitenansicht;

Fig. 3        zeigt eine Abwandlung der Ausführungsform der Fig. 2;

Fig. 4        zeigt eine weitere Abwandlung der Ausführungsform der Fig. 2 in perspektivischer Darstellung;

Fig. 5        zeigt eine weitere Ausführungsform der Erfindung im Längsschnitt;

Fig. 6        veranschaulicht die Verwendung der Ausführungsform gemäß Fig. 5 an einem schematisch angedeuteten Blumentopf.

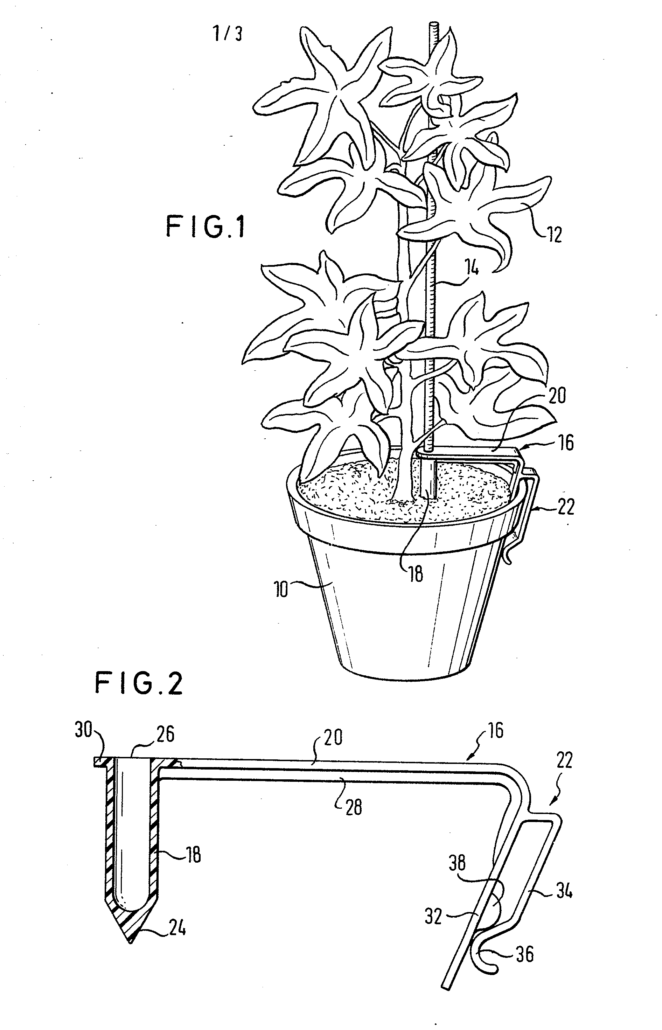

In Fig. 1 ist ein Blumentopf mit 10 und eine Pflanze insgesamt mit 12 bezeichnet. Die Pflanze wird durch eine stabförmige Blumenstütze 14 abgestützt, an der die Pflanze in nicht näher gezeigter Weise mit Hilfe von Bändern, Drähten oder dgl. befestigt ist.

Die Blumenstütze wird an ihrem unteren Ende durch einen insgesamt mit 16 bezeichneten Halter gemäß der vorliegenden Erfindung gehalten. Der Halter 16 umfaßt ein in Fig. 1 senkrecht stehendes, oben offenes Führungsrohr 18, dessen unteres Ende sich auf der in dem Blumentopf befindlichen, nicht näher bezeichneten Erde abstützt oder leicht in diese eingedrückt ist und in das von oben die Blumenstütze 14 eingeschoben ist. Vom oberen Rand des Führungsrohrs 18 erstreckt sich in Radialrichtung ein Stützrahmen 20 bis zum äußeren Rand des Blumentopfes 10. Am äußeren Ende des Stützarmes 20 geht dieser in eine Klammer 22 über, die auf dem Rand des Blumentopfes 10 festgeklammert ist. Nähere Einzelheiten des Halters sollen anschließend anhand von Fig. 2 bis 6 erläutert werden.

In Fig. 2 ist ein Halter 16 gemäß Fig. 1 in einer teilweise aufgeschnittenen Seitenansicht gezeigt. Das Führungsrohr 18 ist im wesentlichen kreiszylindrisch und an seinem unteren Ende in Fig. 2 durch eine kegelstumpfförmige Spitze 24 verschlossen.

Angaben wie "oben", "unten" und dgl. beziehen sich im vorliegenden Zusammenhang stets auf die bestimmungsgemäße Position des Halters in einem Blumentopf.

Am oberen, offenen Ende 26 des Führungsrohres 18 geht von diesem der waagerechte Stützarm 20 aus, der im dargestellten Beispiel durch eine Verstärkungsrippe 18 verstärkt ist. Der Stützarm 20 ist in nicht gezeigter Weise etwas breiter als der Außendurchmesser des Führungsrohrs 18 und geht in einen den oberen Rand des Führungsrohres umgebenden Flansch 30 über, der links in Fig. 2 sichtbar ist.

Am rechten Ende des Stützarms 20 geht von diesem unter einem spitzen Winkel von etwa 75° die Klammer 22 aus. Die Klammer 22 besteht aus einem spitzwinklig in bezug auf den Stützarm 20 nach unten gerichteten, diesen jedoch in seinen Abmessungen fortsetzenden Schenkel 32 und einem von dessen oberer, rechts in Fig. 2 liegenden Außenfläche abzweigenden und nach unten abgewinkelten Klemmarm 34. Der Schenkel 32 und der Klemmarm 34 sind federnd gegeneinander vorgespannt und ermöglichen ein Festlegen der Klammer 22 auf dem oberen Rand eines Blumentopfes. Zur Verstärkung der Klemmwirkung weist der Klemmarm 34 am unteren Ende eine gegen den Schenkel 32 gerichtete und gegen die anliegende Ausbauchung 36 auf. Aus dem gleichen Grunde befindet sich auf der gegenüberliegenden Außenfläche des Schenkels 32 oberhalb der Ausbauchung 36 ein Klemmnocken 38.

Der Halter 16 besteht vorzugsweise aus Kunststoff. Die meisten Kunststoffe weisen eine für die Erzielung der Klemmwirkung der Klammer 22 ausreichende Elastizität auf.

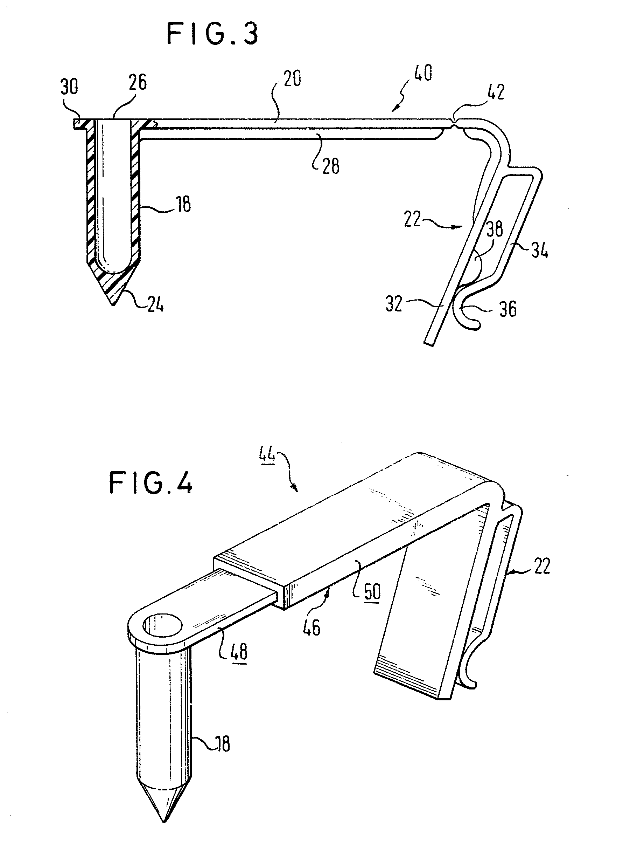

Die meisten handelsüblichen, kegelstumpfförmigen Blumentöpfe weisen im wesentlichen denselben Kegelwinkel auf, so daß die Ausführungsform gemäß Fig. 2 in weitem Umfange verwendbar ist. Bei einigen in letzter Zeit auf den Markt gekommenen Kunststoff-Blumentöpfen ist der Kegelwinkel jedoch kleiner, während er bei einigen flacheren Blumenschalen größer ist. Aus diesem Grunde kann es zweckmäßig sein, zwischen dem Stützarm und der Klammer einen veränderlichen Winkel vorzusehen. Eine entsprechende Ausführungsform ist in Fig. 3 gezeigt. Soweit die Merkmale dieser Ausführungsform mit derjenigen der Fig. 2 übereinstimmen, sind dieselben Bezugsziffern vorgesehen, und eine erneute Erläuterung ist nicht erforderlich.

Der in Fig. 3 gezeigte, insgesamt mit 40 bezeichnete Halter unterscheidet sich von dem Halter 16 gemäß Fig. 2 dadurch, daß am Übergang zwischen dem Stützarm und der Klammer 22 ein Gelenk oder Scharnier 42 vorgesehen ist, das eine gegenseitige Schwenkung von Stützarm 20 und Klammer 22 in der durch diese gebildeten gemeinsamen Ebene gestattet, die der Zeichenebene in Fig. 3 entspricht. Bei der Herstellung des Halters aus Kunststoff kann das Scharnier beispielsweise unmittelbar während des Spritzgußvorganges durch folienartige Verdünnung des Kunststoffmaterials am Übergang zwischen dem Stützarm 20 und der Klammer 22 hergestellt werden.

In Fig. 4 ist eine weitere Ausführungsform eines mit 44 bezeichneten Halters gezeigt. Der Halter 44 bietet eine weitere Verstellmöglichkeit, nämlich eine Längsverstellbarkeit des in diesem Falle insgesamt mit 46 bezeichneten Stützarms. Das Führungsrohr 18 und die Klammer 22 entsprechen den Ausführungsformen gemäß Fig. 2 und 3 und sollen daher nicht erneut erläutert werden.

Der Stützarm 46 ist zusammengesetzt aus einem ersten Stützarmteil 48 und einem zweiten Stützarmteil 50. Das erste Stützarmteil 48 geht von dem Führungsrohr 18 aus und entspricht in seiner Form im wesentlichen dem bereits beschriebenen Stützarm 20 der Figuren 2 und 3. Das zweite Stützarmteil 50 umgreift das Stützarmteil 48 auf der oberen Fläche, an beiden Seiten und wenigstens einem Teil der in Fig. 4 nicht gezeigten unteren Fläche, so daß die Stützarmteile 48,50 teleskopisch gegeneinander verschiebbar sind. Die Abmessungen sind derart gewählt, daß die teleskopische Verschiebung nur unter Überwindung eines gewissen Reibungswiderstandes möglich ist. Ggf. können die aufeinander gleitenden Flächen in nicht gezeigter Weise aufgerauht oder mit einer Riffelung versehen sein, so daß sich die Reibungswirkung erhöht. Bei dieser Ausführungsform kann der Abstand zwischen dem Führungsrohr 18 und der Klammer 22 über einen vorgegebenen Bereich verändert werden, so daß der Halter 44 für Blumentöpfe unterschiedlicher Durchmesser oder auch für verschiedene Einsatzpositionen der Blumenstütze 14 (Fig. 1) verwendet werden kann.

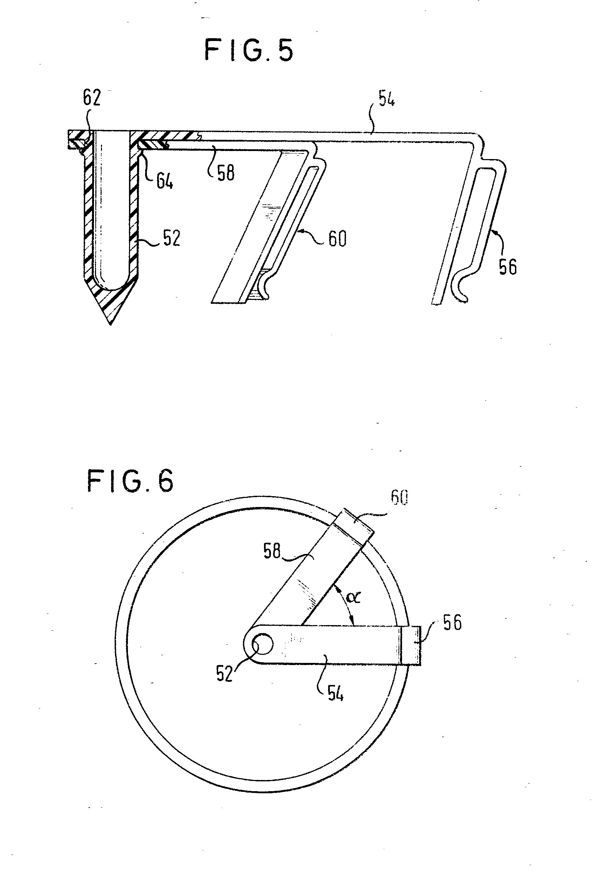

Eine weitere Ausführungsform der Erfindung soll anschliessend anhand von Fig. 5 und 6 erläutert werden. Bei verhältnismäßig hohen Pflanzen und entsprechend hohen Blumenstützen

0058738

- 7 -

kann es u.U. erforderlich sein, eine zusätzliche, besonders stabile Abstützung für die Blumenstütze zu verwirklichen. Zu diesem Zweck kann einerseits die bereits beschriebene Klammer 22 verstärkt werden. Beispielsweise können der Schenkel 32 und der Klemmarm 34 in nicht gezeigter Weise derart bogenförmig ausgeführt sein, daß sie dem bogenförmigen Umriß eines Blumentopfes über einen Teilbereich des Umfanges folgen. Eine andere Verstärkungsmöglichkeit, die in Fig. 5 und 6 dargestellt ist, besteht darin, daß für ein und dasselbe Führungsrohr zwei zu verschiedenen Seiten abzweigende Stützarme mit Klammern verwendet werden. Bei der Ausführungsform gemäß Fig. 5 ist die weitere Möglichkeit vorgesehen, den Winkel zwischen den Stützarmen zu verändern.

Das in Fig. 5 gezeigte, mit 52 bezeichnete Führungsrohr ist mit einem Stützarm 54 verbunden, an dessen äußerem Ende sich eine Klammer 56 befindet. Insoweit besteht weitgehende Übereinstimmung mit der Ausführungsform gemäß Fig. 2. Unterhalb des Stützarmes 54 liegt ein weiterer Stützarm 58, an dessen freiem Ende sich wiederum eine Klammer 60 befindet. Auch dieser Stützarm 58 und die Klammer 60 stimmen in ihren Abmessungen im wesentlichen mit dem Stützarm 54 und der Klammer 56 überein. Ein Unterschied besteht lediglich insoweit, als der Stützarm 58 nicht fest mit dem Führungsrohr 52 verbunden ist, sondern eine dem Außendurchmesser des Führungsrohres entsprechende kreisförmige Öffnung 62 an dem dem Führungsrohr 62 zugewandten Ende aufweist. Mit Hilfe dieser Öffnung 62 kann der Stützarm 58 von unten über das Führungsrohr 52 bis zur Anlage gegen den anderen Stützarm 54 aufgeschoben werden. Ein ringförmiger Wulst 64 verhindert, daß der Stützarm wieder über das Führungsrohr 52 herabgleitet, so daß die Gesamtanordnung untrennbar zusammenhängt. Durch gegenseitige Verdrehung der Stützarme 54, 58 kann der zwischen beiden gebildete, in Fig. 6 mit $\alpha$ bezeichnete Winkel verändert werden. Diese Verstellmöglichkeit bietet einerseits Vorteile bei Transport und Lagerung und zum anderen eine flexible Anpassung an den einzelnen Anwendungsfall. Die in Fig. 5 gezeigte Anwendungsform kann jedoch auch insgesamt starr ausgebildet sein.

Es liegt auf der Hand, daß die in Fig. 2 bis 5 gezeigten Merkmale des Halters, nämlich das Scharnier 42 zwischen Stützarm 20 und Klammer 42 (Fig. 3), die Längsverstellbarkeit des Stützarmes 44 (Fig. 4) und die Verwendung mehrerer, ggf. gegeneinander schwenkbarer Stützarme (Fig. 5) untereinander in beliebiger Weise kombinierbar sind.

0058738

- 9 -

<u>PATENTANSPRÜCHE</u>

1. Halter für Blumenstützen, g e k e n n z e i c h n e t
durch ein Führungsrohr (18,52) zur Aufnahme einer stabförmigen Blumenstütze (14), einen an einem Ende starr mit
dem Führungsrohr verbundenen, radial zu diesem verlaufenden
Stützarm (20,44,54,58) und eine von dem anderen Ende des
Stützarmes ausgehende, im wesentlichen parallel zu dem
Führungsrohr gerichtete Halte-Klammer (22,56,60) zum Aufsetzen auf den oberen Rand eines Blumentopfes (10).

2. Halter nach Anspruch 1, dadurch g e k e n n z e i c h -
n e t, daß das Führungsrohr (18,52) am unteren Ende geschlossen ist und eine kegelförmige Spitze (24) aufweist.

3. Halter nach Anspruch 1 oder 2, dadurch g e k e n n -
z e i c h n e t, daß die Klammer (22,56,69) unter einem
Winkel von im wesentlichen 70-80° spitzwinklig zu dem
Stützarm (20,44,54,58) verläuft.

4. Halter nach Anspruch 1 oder 2, dadurch g e k e n n -
z e i c h n e t, daß zwischen dem Stützarm (20) und der
Klammer (22) ein Scharnier (42) vorgesehen ist, das eine
gegenseitige Schwenkung zwischen Stützarm und Klammer in
der durch diese gebildeten Ebene gestattet.

5. Halter nach einem der Ansprüche 1 bis 4, dadurch g e -
k e n n z e i c h n e t, daß der Stützarm (44) längsverstellbar ist.

6. Halter nach Anspruch 5, dadurch g e k e n n z e i c h -
n e t, daß der Stützarm (44) ein erstes Stützarmteil (48)
und ein zweites Stützarmteil (50) umfaßt, und daß das erste
Stützarmteil in dem zweiten Stützarmteil teleskopisch verschiebbar ist.

7. Halter nach einem der Ansprüche 1 bis 6, dadurch g e - k e n n z e i c h n e t, daß die Klammern (22,56,60) einen den Stützarm (20) verlängernden, von diesem abgewinkelten Schenkel (32) und einen von der Außenfläche des Schenkels (32) abzweigenden, im wesentlichen parallel zu dem Schenkel (32) verlaufenden Klemmarm (34) umfassen.

8. Halter nach Anspruch 7, dadurch g e k e n n z e i c h - n e t, daß der Schenkel (32) und die Klammer (34) breiter als der Stützarm (20) ausgebildet sind.

9. Halter nach einem der Ansprüche 1 bis 8, dadurch g e - k e n n z e i c h n e t, daß von dem oberen Ende des Führungsrohres (52) ein weiterer radialer Stützarm (58) in einer von der Radialrichtung des ersten Stützarmes (54) abweichenden Radialrichtung ausgeht.

10. Halter nach Anspruch 9, dadurch g e k e n n - z e i c h n e t, daß wenigstens einer der Stützarme (54,56) in bezug auf die Längsmittelachse des Führungsrohres (52) schwenkbar ist.

0058738

1/3

FIG.1

FIG.2

FIG.3

FIG.4

FIG.5

FIG.6

Europäisches Patentamt

**EUROPÄISCHER RECHERCHENBERICHT**

Nummer der Anmeldung

EP 81 10 ...

| Kategorie | Kennzeichnung des Dokuments mit Angabe, soweit erforderlich, der maßgeblichen Teile | betrifft Anspruch |
|---|---|---|
| X | <u>DE - A - 1 949 601</u> (BUCHNER) <br><br> * Seite 3 - Figuren 1,2,3 * <br><br> -- | 1,3,7 |
| X | <u>CH - A - 408 516</u> (PFISTER) <br><br> * das ganze Dokument * <br><br> -- | 1,2,3, 5,6,7 |
| A | <u>DE - C - 66 043</u> (KRUGER) <br><br> * das ganze Dokument * <br><br> -- | 1,9 |
| A | <u>DE - A - 2 649 963</u> (BASUS) <br><br> * Seiten 2 und 3; Figuren * | 1,10 |

**EINSCHLÄGIGE DOKUMENTE**

KLASSIFIKATION DER ANMELDUNG (Int. Cl.)

A 01 G 9/12

RECHERCHIERTE SACHGEBIETE (Int. Cl.)

A 01 G 9/12

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| DEN HAAG | 26. Mai 1982 | HERYGERS |

EPA form 1503.1  06.78